# EUROPÄISCHE PATENTSCHRIFT

(11) **EP 1 192 372 B1**
(45) Veröffentlichungstag und Bekanntmachung des Hinweises auf die Patenterteilung: **25.03.2009**
(21) Anmeldenummer: 00963996.4
(22) Anmeldetag: 16.06.2000
(51) Int. Cl.: F16J 3/02

(54) **STRUKTURAUSRICHTUNG VON MEMBRANEN**
STRUCTURAL ALIGNMENT OF MEMBRANES
ORIENTATION DE LA STRUCTURE DE MEMBRANES

(30) Priorität: 17.06.1999 DE 19927576; 20.03.2000 DE 10013533
(43) Veröffentlichungstag der Anmeldung: 03.04.2002
(73) Patentinhaber: Heidrich, Helmut, D-40597 Düsseldorf (DE)
(72) Erfinder: Heidrich, Helmut, D-40597 Düsseldorf (DE)
(86) Internationale Anmeldenummer: PCT/EP2000/005561
(87) Internationale Veröffentlichungsnummer: WO 2000/079154

(56) Entgegenhaltungen:
- EP-A- 0 396 755
- DE-A- 19 824 989
- US-A- 4 809 589

## Beschreibung

Die vorliegende Erfindung betrifft eine Membran mit den Merkmalen des Oberbegriffs des Anspruchs 1.

Es ist bekannt, dass Flachmembranen zum Beispiel mit Wellenprofil oder Rillen beim Betätigen die Materialstauchung bzw. Materialdehnung durch ihr besonderes Profil 2 kompensieren. Ferner erfolgt, ähnlich wie bei DE 198 24 989 A1, eine besonders gute Kompensation, wenn die Stauchung und die Dehnung in einem gleichen Winkel gleichzeitig aus radialer und tangentialer Richtung auf die schräg ausgerichtete Struktur 5 erfolgt.

Der vorliegenden Erfindung liegt die Aufgabe zugrunde, die Kompensierung zu vergrößern und das Arbeitsverhalten der Membran zu verbessern.

Dieses Problem wird von einer Membran mit den Merkmalen der Ansprüche 1 bis 7 gelöst.

Erfindungsgemäß ist vorgesehen, dass die Fläche des ringförmigen, strukturierten Bereiches 5 deckend mit Struktur 5 versehen ist, wobei die Scheitellinie 8 mindestens in einem Viertel ihrer Länge jeweils so ausgerichtet ist, dass dabei dort in dem Verlauf der Scheitellinie 8 jeweils der Winkel β in seiner Größe von der Radialrichtung zu der Scheitellinie 8 beibehalten wird, wobei die Scheitellinie 8 in diesem ringförmigen, strukturierten Bereich 5 sich in einem die Scheitellinie 8 umspannenden Halbkreis erstreckt, dessen Kreismittelpunkt mit dem Zentrum 3 der Membran übereinstimmt. Der Strukturverlauf hat im bestimmten Bereich zu der Radialrichtung, dem Scheitelpunkt von Winkel β, gradmäßig eine gleiche und bestimmte Ausrichtung. Bei der erfindungsgemäßen Membran ist die bestimmte Gradzahl in dem Bereich zwischen 34° und 60° mehr als an einem Punkt vorhanden. Je näher dabei die bestimmte Winkelgröße an 45° heranreicht, desto besser ist die Kompensation.

Ein Ausführungsbeispiel der vorliegenden Erfindung ist in der Zeichnung dargestellt und wird im folgenden näher beschrieben.

Es zeigen:

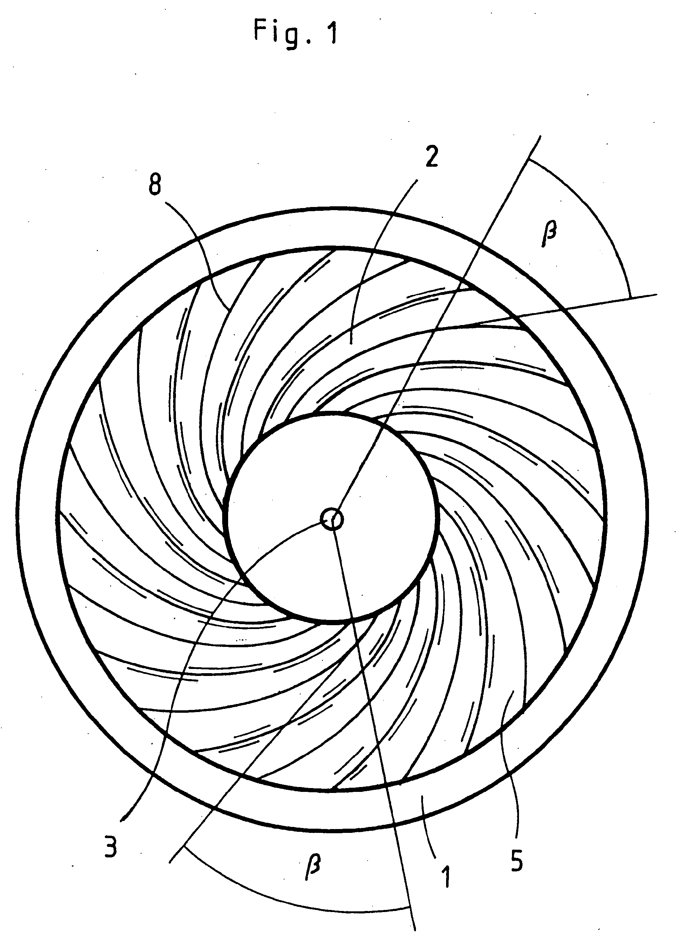

- Fig. 1:: eine Draufsicht auf eine erfindungsgemäße Membran mit fortlaufend gleichbleibendem Winkel β von der Scheitellinie zu der Radialrichtung während des Strukturverlaufs.

In der Figur 1 ist eine erfindungsgemäße Membran in einer Draufsicht dargestellt. Die Membran weist einen äußeren Randbereich 1 auf. Daran anschließend folgt ein ringförmiger, strukturierter Bereich 5, der nach innen von dem Zentrum 3 begrenzt wird. Ferner sind die Struktur 5, die Scheitellinie 8 und der doppelte Winkel β vermerkt. In dem Strukturverlauf behält die Scheitellinie 8 fortwährend den Winkel β in seiner Größe zu der Radialrichtung vorzugsweise bei, zum Beispiel beträgt bei der Figur 1 der Winkel β 52°. Dadurch ist die Kompensation in den einzelnen mit Profil 2 versehenen Membranabschnitten ungefähr gleichbleibend.

Die erfindungsgemäße Membran ist dort geeignet, wo eine große Flexibilität und Kompensation, wie bei gewölbten Membranen zum Beispiel von Speichern und Pumpen gefordert wird.

Die mit der Erfindung erzielte vorteilhafte Winkung kommt dadurch zustande, dass die Kompensation je nach Konstruktion gleichzeitig mindestens an zwei Punkten mit dem Winkel gleicher Gradzahl β von 34° oder bis zu 60° arbeiten kann. Ferner, dass die Ausrichtung der Kompensationskräfte auf den Strukturverlauf vorzugsweise gleich bleiben.

## Patentansprüche

1. Membran mit einem in ihre Oberfläche eingebrachten Profil (2), das wellen-, falten- oder rillenförmige Struktur (5) mit durch Wellen, Falten bzw, Rillen gebildeten Scheitellinien (8) aufweist, wobei durch den schnittpunkt der Radialrichtunglinie vom mittelpunkt zum Radius der Membran mit der Tangente an der Scheitellinie (8) in diesem Schnittpunkt ein Winkel (β) definiert ist, **dadurch gekennzeichnet, dass** in einem flächendeckend mit der Struktur (5) versehenen ringförmigen, strukturierten Bereich (5) die Scheitellinie (8) mindestens in einem Viertel ihrer Länge jeweils so ausgerichtet ist, dass dabei dort in dem Verlauf der Scheitellinie (8) jeweils der Winkel (β) in seiner Größe von der Radialrichtung zu der Scheitellinie (8) beibehalten wird, wobei die Scheitellinie (8) in dem ringförmigen, strukturierten Bereich (5) sich in einem die Scheitellinie (8) umspannenden Halbkreis erstreckt, dessen Kreismittelpunkt mit dem Zentrum (3) der Membran übereinstimmt.

2. Membran nach Anspruch 1 mit einem in ihre Oberfläche eingebrachten Profil (2), das wellen-, falten- oder rillenförmige Struktur (5) aufweist, **dadurch gekennzeichnet, dass** die Scheitellinie (8) in ihrer ganzen Länge jeweils so ausgerichtet ist, dass dabei dort in dem Verlauf der Scheitellinie (8) jeweils der Winkel (β) in seiner Größe von der Radialrichtung zu der Scheitellinie (8) beibehalten wird.

3. Membran nach mindestens einem der vorhergehenden Ansprüche, **dadurch gekennzeichnet, dass** der Winkel (β) eine gleichbleibende bestimmte Winkelgröße hat, die 38° oder bis zu 52° beträgt.

4. Membran nach mindestens einem der vorhergehenden Ansprüche, **dadurch gekennzeichnet, dass** der Winkel (β) eine gleichbleibende bestimmte Winkelgröße hat, die 34° oder bis zu 60° beträgt.

5. Membran nach mindestens einem der vorhergehenden Ansprüche, **dadurch gekennzeichnet, dass** bei einem Winkel (β) mit 45° von der Radialrichtung zu der Scheitellinie (8) mit dem selben Scheitelpunkt dabei der Winkel von der Scheitellinie (8) zu der Umfangsrichtung gleichwohl auch 45° beträgt.

6. Membran nach mindestens einem der vorhergehenden Ansprüche, **dadurch gekennzeichnet, dass** die nach diesen Ansprüchen gleichbleibende Ausrichtung der Scheitellinie (8) zur Radialrichtung sich in dem Verlauf der Scheitellinie (8) bis zu 3° je cm Scheitellinienlänge verändert und dabei die Scheitellinie (8) nur in einem ungefähr gleichbleibend großen Winkel (β) zu der Radialrichtung verläuft.

7. Membran nach den Ansprüchen 1 bis 6, **dadurch gekennzeichnet, dass** die Struktur (5) auf der einen Membranseite gegenüber der anderen Membranseite ein gleiches, weniger stark ausgeprägtes, anderes oder eben gestaltetes Profil (2) hat.

## Claims

1. A membrane with a profile (2) inserted in its surface, with an undulating, pleated or furrowed structure (5) with apex lines (8) in the form of waves, crinkles or furrows, wherein the intersection of the radial line from the centre to the radius of the membrane with the tangent on the apex line (8) defines an angle (β) in this intersection, **characterised in that,** within a circular, structured area (5) covering the area of the structure (5), the apex line (8) is in each case aligned for at least a quarter of its length such that the size of the relevant angle (β) from the radial line to the apex line (8) is maintained along the entire apex line (8), wherein the apex line (8) in the circular, structured area (5) stretches across the area of a semicircle encompassing the apex line (8), the centre of which semicircle is the same as the centre (3) of the membrane.

2. Membrane according to claim 1 with a profile (2) inserted in its surface with an undulating, pleated or furrowed structure (5), **characterised in that** the apex line (8) is in each case aligned along its entire length such that the size of the relevant angle (β) from the radial line to the apex line (8) is maintained along the entire apex line (8).

3. Membrane according to at least one of the above claims, **characterised in that** the acute angle (β) has a certain uniform angle size of 38° or up to 52°.

4. Membrane according to at least one of the above claims, **characterised in that** the acute angle (β) has a certain uniform angle size of 34° or up to 60°.

5. Membrane according to at least one of the above claims, **characterised in that,** with an angle (β) of 45° from the radial line to the apex line (8) with the same angular point, the angle from the apex line (8) to the circumferential direction also measures 45°.

6. Membrane according to at least one of the above claims, **characterised in that** the alignment of the apex line (8) to the radial direction, which remains uniform according to these claims, changes by up to 3° per cm of apex line (8) during the course of the apex line (8) and wherein the apex line (8) runs only in an approximately uniform acute angle (β) to the radial line.

7. Membrane according to claims 1 to 6, **characterised in that** the structure (5) on one membrane side has a similar, less pronounced, different or level profile (2) compared to the other membrane side.

## Revendications

1. Membrane avec un profil (2) placé dans sa surface, qui présente une structure (5) en forme d'ondes, de plis ou de rainures avec lignes de sommet (8) formées par les ondes, plis ou rainures, un angle (β) étant défini par le point d'intersection de la ligne en direction radiale du centre au rayon de la membrane avec la tangente à la ligne de sommet (8) dans ce point d'intersection, **caractérisé en ce que** dans une zone (5) annulaire structurée, complètement couverte par la structure, la ligne de sommet (8) est orientée, au moins dans un quart de sa longueur, de sorte qu'au cours de la ligne de sommet (8) l'angle (β) soit conservé dans sa taille de la direction radiale vers la ligne de sommet (8), la ligne de sommet (8) dans la zone (5) annulaire structurée s'étendant dans un demi-cercle qui embrasse la ligne de sommet (8) et dont le centre de cercle correspond au centre (3) de la membrane.

2. Membrane selon la revendication 1 avec un profil (2) placé dans sa surface (2), qui présente une structure (5) en forme d'ondes, de plis ou de rainures, **caractérisé en ce que** la ligne de sommet (8) est orientée dans toute sa longueur de sorte que l'angle (β) soit conservé là dans le cours de la ligne de sommet (8), dans sa taille, de la direction radiale vers la ligne de sommet (8).

3. Membrane selon au moins une des revendications précédentes, **caractérisée en ce que** l'angle (β) a une grandeur d'angle constante déterminée, s'élevant à 38° ou à jusqu'à 52°.

4. Membrane selon au moins une des revendications précédentes, **caractérisée en ce que** l'angle (β) a une grandeur d'angle constante déterminée, s'élevant à 34° ou jusqu'à 60°.

5. Membrane selon au moins une des revendications précédentes, **caractérisée en ce que**, pour un angle (β) de 45° de la direction radiale à la ligne de sommet (8)avec le même sommet, l'angle de la ligne de sommet (8) vers la direction circonférentielle s'élève tout de même également à 45°.

6. Membrane selon au moins une des revendications précédentes, **caractérisée en ce que** l'orientation constante de la ligne de sommet (8) selon ces revendications par rapport à la direction radiale change au cours de la ligne de sommet (8) jusqu'à 3° par cm de longueur de la ligne de sommet et qu'en même temps, la ligne de sommet (8) prend un angle (β) de grandeur à peu près constante par rapport à la direction radiale.

7. Membrane selon les revendications 1 à 6, **caractérisée en ce que** la structure (5) sur l'une des surfaces de la membrane a un profil (2) identique, moins fortement marqué, différent ou de façon plane par rapport à l'autre surface de la membrane.
